# EUROPEAN PATENT APPLICATION

(11) **EP 4 170 854 A1**
(43) Date of publication of application: **26.04.2023**
(21) Application number: 21829927.9
(22) Date of filing: 21.06.2021
(51) Int. Cl.: H02J 7/00

(54) **ELECTRONIC DEVICE, AND CHARGING METHOD AND APPARATUS**

(30) Priority: 23.06.2020 CN 202010583973
(71) Applicant: Vivo Mobile Communication Co., Ltd., Dongguan, Guangdong 523863 (CN)
(72) Inventor: XIE, Decheng, Dongguan, Guangdong 523863 (CN); LIU, Fan, Dongguan, Guangdong 523863 (CN)
(74) Representative: Raffay & Fleck
(86) International application number: PCT/CN2021/101221
(87) International publication number: WO 2021/259198

(57) **Abstract**

The present application relates to the field of terminals, and discloses an electronic device, and a charging method and apparatus. The electronic device comprises a battery, a first circuit board, a heating element, and a charging interface module, wherein the charging interface module has an input end pluggably connected to an external power supply, and an output end electrically connected to an input end of the first circuit board; an output end of the first circuit board is electrically connected to the battery, and the first circuit board charges the battery; the output end of the charging interface module is electrically connected to the heating element, and the heating element heats the battery.

## Description

### CROSS-REFERENCE TO RELATED APPLICATIONS

The present invention claims priority to Chinese Patent Application No. 202010583973.8, filed with the National Intellectual Property Administration, PRC on June 23, 2020, and entitled "BATTERY AND CONTROL METHOD THEREOF, AND ELECTRONIC DEVICE", which is incorporated herein by reference in its entirety.

### TECHNICAL FIELD

This application relates to the field of terminals, and specifically, to an electronic device, and a charging method and apparatus.

### BACKGROUND

At present, batteries arranged in most electronic devices are lithium batteries. When the lithium battery is charged, a positive electrode of the lithium battery can generate lithium ions, and the lithium ions can diffuse to a negative electrode of the lithium battery through electrolyte and be combined with the electrons of the negative electrode, and an electrochemical reaction occurs, causing an energy change, thereby completing the charging process.

However, in the process of implementing this application, it is found that there are at least the following problems in the prior art: under the condition of a low temperature, the diffusion speed of the lithium ions becomes lower, leading to a problem that the charging speed of the lithium battery is reduced, and the lithium battery even cannot be charged normally.

### SUMMARY

The purpose of embodiments of this application is to provide an electronic device, and a charging method and apparatus, which can resolve the problem that a charging speed of a battery is reduced and the battery cannot be charged normally under the condition of a low temperature.

To resolve the foregoing technical problem, this application is implemented as follows:

According to a first aspect, an embodiment of this application provides an electronic device, including a battery, a first circuit board, a heating element, and a charging interface module, where
an input port of the charging interface module is configured to be pluggable connected to an external power supply, an output port of the charging interface module is electrically connected to an input end of the first circuit board, an output end of the first circuit board is electrically connected to the battery, and the first circuit board charges the battery; and
the output port of the charging interface module is electrically connected to the heating element, and the heating element heats the battery.

According to a second aspect, a charging method based on the foregoing electronic device is provided, including:
acquiring a temperature of the battery in a case that the battery is charged through the first circuit board;
supplying power to the heating element in a case that the temperature is less than a preset threshold and a heating duration of the heating element is less than a first preset duration, where the heating element heats the battery; and
stopping supplying power to the heating element in a case that the temperature is greater than the preset threshold, or the heating duration of the heating element is greater than or equal to the first preset duration.

According to a third aspect, an embodiment of this application provides a charging apparatus based on the foregoing electronic device, including:
an acquisition module, configured to acquire a temperature of the battery, in a case of charging the battery through the first circuit board;
a power supply module, configured to supply power to the heating element in a case that the temperature is less than a preset threshold and a heating duration of the heating element is less than a first preset duration, where the heating element heats the battery; and
a power supply stop module, configured to stop supplying power to the heating element in a case that the temperature is greater than the preset threshold or the heating duration of the heating element is greater than or equal to the first preset duration.

According to a fourth aspect, an embodiment of this application provides an electronic device, including a processor, a memory, and a program or instructions stored in the memory and runnable on the processor, where the program or the instructions, when being executed by the processor, implements steps of the method according to the second aspect.

According to a fifth aspect, an embodiment of this application provides a readable storage medium, storing a program or instructions, where the program or the instructions, when being executed by a processor, implements steps of the method according to the second aspect.

According to a sixth aspect, an embodiment of this application provides a chip, including a processor and a communication interface, where the communication interface is coupled to the processor, and the processor is configured to run a program or instructions to implement the method to the second aspect.

The electronic device provided in the embodiments of this application includes a first circuit board, a heating element, and a charging interface module, where an input port of the charging interface module is configured to be pluggable connected to an external power supply, and an output port of the charging interface module is electrically connected to an input end of the first circuit board, an output end of the first circuit board is electrically connected to the battery, the first circuit board charges the battery, the output port of the charging interface module is electrically connected to the heating element, and the heating element heats the battery. In this way, the heating element is added to the electronic device, so that when the battery is charged, in a case that a temperature of the battery is relatively low, the charging interface module cannot only charge the battery, and but also supply power to the heating element, so as to rapidly heat the battery to increase the temperature of the battery, and make the charging speed of the battery not be affected by the low temperature, thereby increasing the charging speed of the battery.

### BRIEF DESCRIPTION OF THE DRAWINGS

FIG. 1 is a schematic structural diagram of an electronic device according to an embodiment of this application;
FIG. 2 is a schematic structural diagram of a control module, an auxiliary board, and a charging interface module according to an embodiment of this application;
FIG. 3 is a schematic structural diagram of an electronic device according to an embodiment of this application;
FIG. 4 is a schematic structural diagram of a heating element according to an embodiment of this application;
FIG. 5(A) is a schematic structural diagram of a heating element according to an embodiment of this application;
FIG. 5(B) is a schematic diagram of a scenario of a heating element according to an embodiment of this application;
FIG. 6 is a schematic structural diagram of an electronic device according to an embodiment of this application;
FIG. 7 is a schematic structural diagram of a first circuit board according to an embodiment of this application;
FIG. 8 is a schematic flowchart of a charging method according to an embodiment of this application;
FIG. 9 is a schematic flowchart of a charging method according to an embodiment of this application;
FIG. 10 is a schematic structural diagram of an electronic device according to an embodiment of this application; and
FIG. 11 is a schematic structural diagram of hardware of an electronic device for implementing the embodiments of this application.

### DETAILED DESCRIPTION

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts fall within the protection scope of this application.

Terms such as "first" and "second" in the specification and claims of this application are used to distinguish similar objects, but are not used to describe a specific sequence or order. It should be understood that the data used in such a way may be interchangeable in proper circumstances, so that the embodiments of this application can be implemented in sequences other than those illustrated or described herein. In addition, "and/or" in this specification and the claims represents at least one of the connected objects, and character "/" in this specification and the claims generally indicates an "or" relationship between the associated objects.

It should be noted that, the main idea of the embodiments of this application is that, a flexible circuit board is added to an electronic device. The flexible circuit board can be in contact with the battery. In a charging state, in a case that a temperature of the battery is less than a preset threshold, the temperature of the battery can be increased by heating the flexible circuit board, thereby increasing a charging speed of the battery. In this way, even though the external temperature is relatively low, the technical requirements such as fast charging and turning on the electronic device can also be met.

The embodiments of this application may be applicable to electronic devices such as mobile personal computers, tablet computers, smart watches, augmented reality (Augmented Reality, AR) devices, virtual reality technology (Virtual Reality, VR) devices, electric vehicles, electric bicycles, and electric toothbrushes.

The following describes an electronic device provided in the embodiments of this application in detail with reference to the accompanying drawings by using specific embodiments and application scenario thereof.

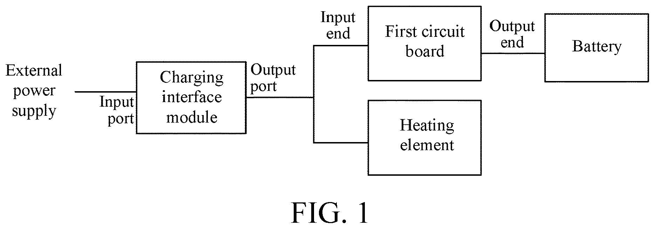

FIG. 1 is a schematic structural diagram of an electronic device according to an embodiment of this application. As shown in FIG. 1, the electronic device may include a battery, a first circuit board, a heating element, and a charging interface module.

In FIG. 1, the charging interface module may include an input port and an output port, and the first circuit board also includes an input end and an output end. The input port of the charging interface module is configured to be pluggable connected to an external power supply, and the output port of the charging interface module is electrically connected to the input end of the first circuit board. The output end of the first circuit board is electrically connected to the battery, and the first circuit board may charge the battery. In addition, the output port of the charging interface module may also be electrically connected to the heating element, and the heating element is configured to heat the battery.

In the electronic device shown in FIG. 1, when the battery is charged, power may be supplied by the external power supply in a pluggable manner. To fast charge the battery, the charging interface module may be connected to the external power supply through an external fast charger. Specifically, the external fast charger can provide the battery with a charging voltage greater than 11V.

In a case that the external power supply supplies the power, the charging interface module may charge the battery through the first circuit board. In a case that a temperature of the battery is relatively low (for example, less than a preset threshold), to avoid the problem of a low charging speed due to the relatively low battery temperature, the charging interface module may supply power to the heating element. In a case that the heating element is supplied with power, the heating element may heat the battery to increase the temperature of the battery, thereby increasing the charging speed.

In this way, the heating element is added to the electronic device, so that when the battery is charged, in a case that a temperature of the battery is relatively low, the charging interface module cannot only charge the battery, and but also supply power to the heating element, so as to rapidly heat the battery to increase the temperature of the battery, and make the charging speed of the battery not be affected by the low temperature, thereby increasing the charging speed of the battery.

Optionally, the electronic device provided in this embodiment may further include an auxiliary board, and the output port of the charging interface module may be connected to the heating element through the auxiliary board and the input end of the first circuit board.

Optionally, the electronic device provided in this embodiment may include a control module, and the charging interface module may be electrically connected to the heating element through the control module, where the output port of the charging interface module may be connected to the control module by welding, and supply power to the heating element through the control module. The control module may include elements such as a power field effect transistor, a comparator, a timer, and wirings, where the power field effect transistor is configured to output a charging current, the comparator is configured to compare whether the temperature of the battery is less than the preset threshold, the timer is configured to subsequently perform timing after supplying of power to the heating element is stopped (that is, heating of the battery is stopped), and the wirings are configured to connect the power field effect transistor, the comparator, and the timer.

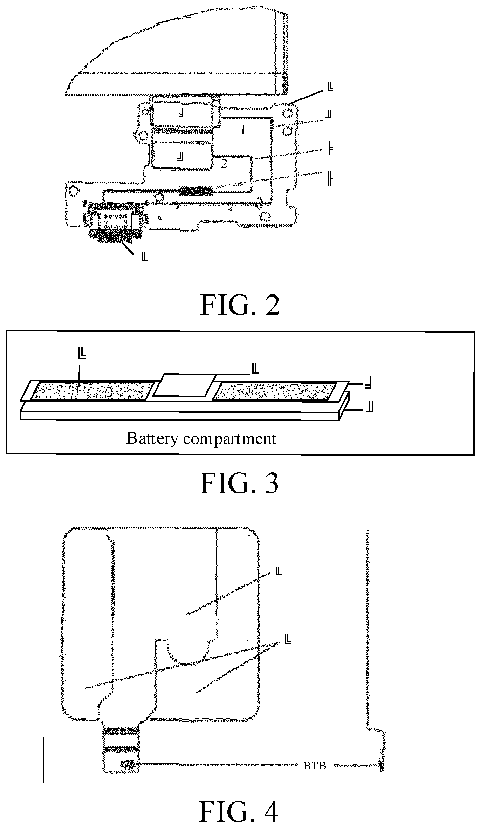

To describe the foregoing control module, auxiliary board, and charging interface module more clearly, reference may be made to FIG. 2 for a schematic structural diagram of the control module, auxiliary board and charging interface module.

In FIG. 2, ① represents the charging interface module, ② represents the auxiliary board, ③ represents an upper board-to-board connector (Board to Board Connector, BTB), ④ represents the first circuit board, ⑤ represents a lower BTB, ⑥ represents the heating element, and ⑦ represents the control module.

The input port of the charging interface module ① may be pluggable connected to the external power supply (not shown in FIG. 2), and the output port of the charging interface module may be connected to the auxiliary board ② by welding. When the battery is charged, the charging interface module ① may output a charging voltage to the auxiliary board ②.

There may be two corresponding paths in the auxiliary board ②, where the first path is that: the output port of the charging interface module ① is electrically connected to the input end of the auxiliary board ②, a first output end of the auxiliary board ② is connected to the first circuit board ④ through the upper BTB ③, so as to charge the battery through the first circuit board ④; and the second path is that: the output port of the charging interface module ① is electrically connected to the input end of the auxiliary board ②, and a second output end of the auxiliary board ② is connected to the heating element ⑥ through the lower BTB ⑤. The second path in the auxiliary board ② may further include the control module ⑦ inside, where the control module ⑦ controls the heating element ⑥ to heat the battery in a case that the temperature of the battery is less than the preset threshold, to increase the temperature of the battery.

Optionally, the electronic device in this embodiment further includes a battery compartment and a battery rear cover, where the battery compartment is configured to accommodate the battery. The heating element may be located between the battery compartment and the battery, or may be located between the battery and the battery rear cover, which is not specifically limited herein.

Optionally, a thickness of the heating element may be determined according to actual situations. Optionally, the thickness of the heating element may be set within 0.05 mm. In this way, less space in the battery compartment may be occupied, and influences of the heating element on the structure, appearance, and reliability of the electronic device may be all ignored.

Optionally, the heating element may further be at least partially in contact with the battery for better heating the battery. Specifically, the manner of contact between the heating element and the battery may be full-area contact or partial-area contact, which is not specifically limited herein. In this way, the heating element may be flexibly arranged in the battery compartment according to actual situations. In a case that the heating element is at least partially in contact with the battery, to better fix the heating element, back adhesive may be arranged on both a first surface and a second surface of the heating element. The heating element may be in contact with the battery through the back adhesive arranged on the first surface, and be in contact with the battery compartment or the battery rear cover through the back adhesive arranged on the second surface, where the back adhesive may be understood as a double-sided adhesive.

Optionally, the first circuit board may be located between the heating element and the battery compartment, or may be located between the heating element and the battery rear cover, where a designated region of the second surface of the heating element may be provided with no adhesive to avoid the first circuit board, which can prevent the back adhesive from affecting performance of the first circuit board.

It should be noted that, an area of the first circuit board may be less than an area of the heating element, the manner of contact between the heating element and the battery compartment or the battery rear cover may be partial-area contact. In this way, based on that the heating element is fixed, the first circuit board may be arranged conveniently between the heating element and the battery compartment, or the first circuit board may be arranged conveniently between the heating element and the battery rear cover.

It should be understood that, in addition to arranging the back adhesive in the heating element, the heating element may also be fixed in other manners, such as welding.

To more clearly describe the positional relationship among the first circuit board, the heating element, the battery, and the battery compartment, reference may be made to FIG. 3.

In FIG. 3, ① represents the first circuit board, ② represents the back adhesive, ③ represents the heating element, and ④ represents the battery. The battery compartment may be provided with the first circuit board ①, the back adhesive ②, the heating element ③, and the battery ④ inside in a superimposed manner. The back adhesive ② may be arranged on the first surface of the heating element ③ (which may be understood as a surface facing the battery ④), so that the heating element ③ is in contact with the battery ④ through the back adhesive ②, and the back adhesive may be arranged on some regions (that is, gray regions shown in FIG. 3) of the second surface of the heating element ③ (which may be understood as a surface facing away from the battery ④), so that the heating element ② is in contact with the battery compartment. In addition, no back adhesive is arranged in the designated region below corresponding to the first circuit board ①, so as to avoid the first circuit board ①, thereby preventing the back adhesive from affecting the performance of the first circuit board ①.

Optionally, the heating element may include a resistor and an insulation layer, which may specifically be a resistor and a polyimide insulation layer obtained by etching an alloy leaf; or include a heating wire resistor element and an insulating protective film, where the resistor and the heating wire resistor element obtained by etching the alloy leaf may produce heat in a case of being powered on. In this way, in a case that the temperature of the battery is less than the preset threshold, the charging interface module may heat the heating element by supplying power to the heating element, and the resistor or the resistance wire element in the heating element may produce heat in a case of being powered on, thereby increasing the temperature of the battery.

Optionally, the heating element may be connected to the charging interface module through a board-to-board connector, so that the heating element can be heated to a required temperature safely and rapidly, thereby increasing the temperature of the battery. In addition, the first circuit board may also be connected to the charging interface module through a board-to-board connector.

For a schematic structural diagram of the heating element, reference may be made to FIG. 4. FIG. 4 includes a front view and a side view of the second surface of the heating element, where the designated area ① in the middle may be provided with no back adhesive to avoid the first circuit board, and some surrounding regions ② may be provided with the back adhesive to fix the heating element. A BTB (Board to Board Connector) may be arranged at the bottom of the heating element, and the heating element can be electrically connected to the output port of the charging interface module through the BTB, so that the heating element can be safely and rapidly heated to the required temperature, thereby increasing the temperature of the battery.

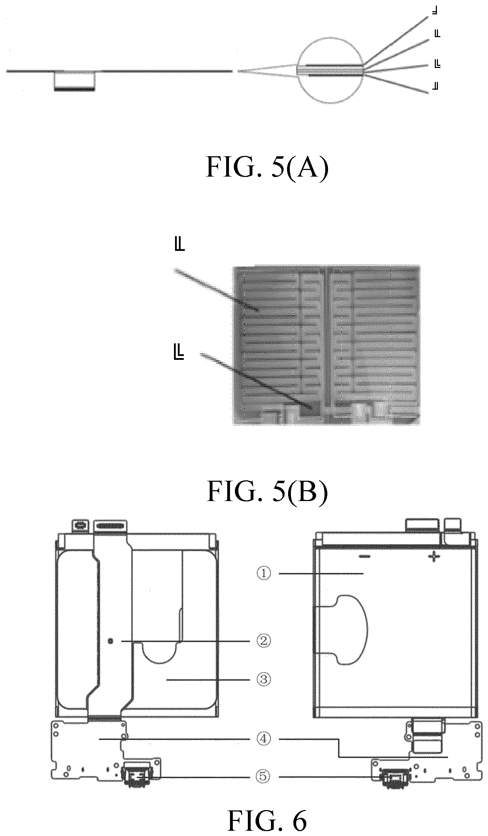

For schematic structural diagrams of the heating element, reference may be further made to FIG. 5(A) and FIG. 5(B).

FIG. 5(A) is a schematic diagram of a specific structure of the heating element. The heating element shown in FIG. 5(A) includes an etched alloy leaf ① and a polyimide insulation layer ②. The etched alloy leaf ① may be sealed between two layers of polyimide film ②, and the polyimide film ② can play an insulating and protective role. One side of the alloy leaf ① is provided with the back adhesive (that is, ③ shown in the figure), and one side of the polyimide insulation layer ② is also provided with the back adhesive (that is, (4) shown in the figure).

FIG. 5(B) is a physical picture of the heating element, including the etched alloy leaf ① and the polyimide insulation layer ②. It may be seen in FIG. 5(B) that, by etching the alloy leaf ①, a plurality of uniformly distributed resistors can be obtained, where the resistors obtained by etching the alloy leaf ① can produce heat in a case of being powered on.

Optionally, the electronic device in this embodiment may further include a temperature sensor. The temperature sensor may be located in the middle region of the foregoing battery compartment and connected to the first circuit board or the control module, so that the temperature sensor can detect the temperature of the battery.

To more clearly describe the positional relationship among the foregoing first circuit board, heating element, battery, charging interface module, auxiliary board, and temperature sensor, reference may be made to FIG. 6. FIG. 6 includes a front view and a rear view of the electronic device.

In FIG. 6, ① represents the battery, ② represents the first circuit board (a circle represents the temperature sensor), ③ represents the heating element, ④ represents the auxiliary board, and ⑤ represents the charging interface module. The input port of the charging interface module ⑤ is pluggable connected to the external power supply, the output port of the charging interface module is electrically connected to the input end of the auxiliary board ④, the output end of the auxiliary board ④ is electrically connected to the input end of the first circuit board ② and the heating element ③, the output end of the first circuit board ② is connected to the battery ① and a main board (not shown in FIG. 6), the heating element ③ is in contact with the battery, and the temperature sensor is connected to the first circuit board ②.

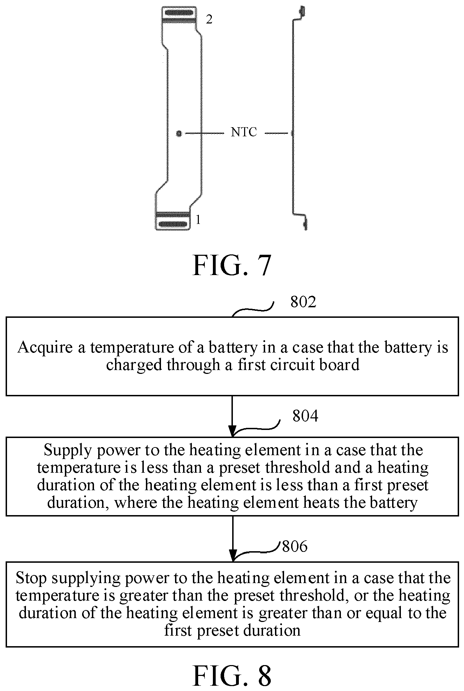

Specifically, for a schematic structural diagram of the first circuit board, reference may be made to FIG. 7, where an end 1 of the first circuit board may be connected to the output port of the charging interface module, and an end 2 of the first circuit board may be connected to the battery. The first circuit board can charge the battery based on the voltage provided by the charging interface module. In FIG. 7, NTC may represents the temperature sensor, and the NTC may be connected to the first circuit board to detect the temperature of the battery.

The electronic device provided in the embodiments of this application includes a first circuit board, a heating element, and a charging interface module, where an input port of the charging interface module is configured to be pluggable connected to an external power supply, and an output port of the charging interface module is electrically connected to an input end of the first circuit board, an output end of the first circuit board is electrically connected to the battery, the first circuit board charges the battery, the output port of the charging interface module is electrically connected to the heating element, and the heating element heats the battery. In this way, the heating element is added to the electronic device, so that when the battery is charged, in a case that a temperature of the battery is relatively low, the charging interface module cannot only charge the battery, and but also supply power to the heating element, so as to rapidly heat the battery to increase the temperature of the battery, and make the charging speed of the battery not be affected by the low temperature, thereby increasing the charging speed of the battery.

The embodiments of this application further provide a charging method based on the foregoing electronic device. FIG. 8 is a schematic flowchart of a charging method according to an embodiment of this application. The method is described as follows:
S802: Acquire a temperature of the battery in a case that the battery is charged through the first circuit board.

In S802, the temperature of the battery may be acquired when the battery in the electronic device is charged through the first circuit board.

Specifically, when the electronic device is connected to an external power supply, it may be regarded as charging the battery of the electronic device. In this case, the electronic device may acquire the temperature of the battery through the temperature sensor in the embodiment shown in FIG. 1.

It should be noted that, when the battery is charged, the heating element in the electronic device is in a non-heating state of the battery by default. That is, in S802, when the temperature of the battery is acquired, the heating element is in a non-powered state.

S804: Supply power to the heating element in a case that the temperature is less than a preset threshold and a heating duration of the heating element is less than a first preset duration, where the heating element heats the battery.

In S804, after the temperature of the battery is acquired, whether the temperature of the battery is less than the preset threshold (which can be set according to actual situations) may be determined. In a case that the temperature is less than the preset threshold, power may be supplied to the heating element, so that the heating element heats the battery.

When the battery is heated, timing may be performed for the heating duration, and whether the temperature of the battery (the temperature during the heating) is less than the preset threshold and whether the heating duration is less than the first preset duration are determined. In a case that the temperature is less than the preset threshold and the heating duration is less than the first preset duration, the heating can continue, so as to continue to increase the temperature of the battery, otherwise, S806 may be performed.

S806: Stop supplying power to the heating element in a case that the temperature is greater than the preset threshold, or the heating duration of the heating element is greater than or equal to the first preset duration.

In S806, in a case that the temperature of the battery is heated to being greater than the preset threshold, the supplying of power to the heating element may be stopped, that is, the heating of the battery may be stopped; or in a case that the heating duration is greater than or equal to the first preset duration, to prevent a failure of the temperature sensor due to being in a high temperature state for a long time, the supplying of power to the heating element may also be stopped.

It should be noted that, in the process of charging the battery, to prevent the heating element from being started and stopped repeatedly to affect the service life of the heating element, the timing may also be started after supplying of power to the heating element is stopped. In a case that a timing duration is equal to a second preset duration, the temperature of the battery may be acquired again, and whether to supply power to the heating element is determined based on the acquired temperature. In other words, after supplying of power to the heating element is stopped, the temperature of the battery may be acquired again at intervals of the second preset duration, and whether power needs to be supplied to the heating element is determined based on the temperature acquired again.

It should be further noted that, in a case that the temperature of the battery is greater than or equal to the preset threshold, it is unnecessary to supply power to the heating element. Therefore, a relatively large first charging current may be used to charge the battery in this case, thereby increasing the charging speed of the battery. In addition, in a case that the temperature of the battery is less than the preset threshold, it is necessary to charge the battery and heat the battery simultaneously. Therefore, a relatively small second charging current may be used to charge the battery in this case, where the first charging current is greater than the second charging current.

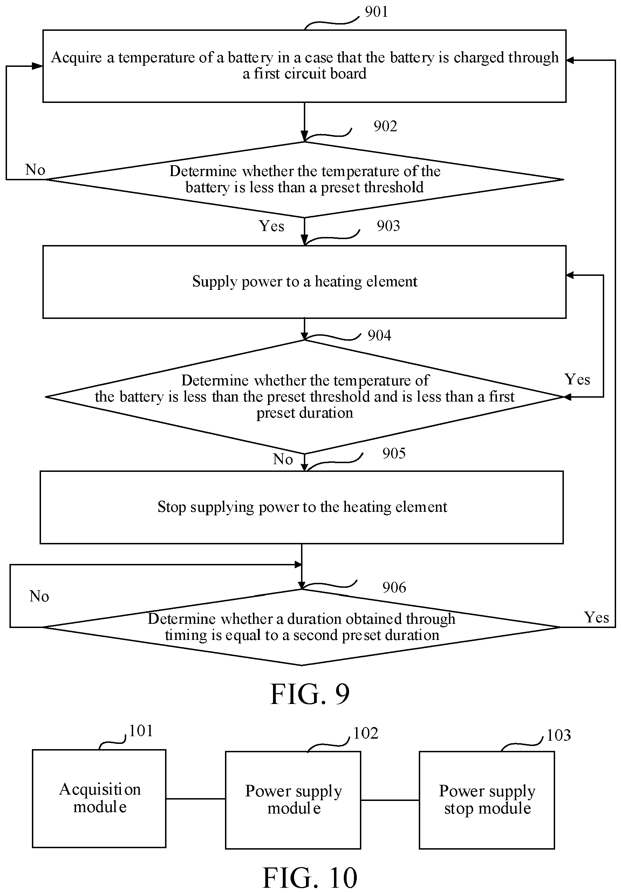

To describe the foregoing charging method of the electronic device more clearly, reference may also be made to FIG. 9. FIG. 9 is a schematic flowchart of a charging method according to an embodiment of this application.

S901: Acquire a temperature of the battery in a case that the battery is charged through the first circuit board.

It should be noted that, a premise of performing S901 herein is that the heating element is in a non-powered state. That is, the battery is in a non-heating state.

In a case that the heating element is in the non-powered state, it is unnecessary to supply power to the heating element. That is, it is unnecessary to heat the battery. Therefore, a relatively large first charging current may be used to charge the battery in this case, thereby increasing the charging speed of the battery.

S902: Determine whether the temperature of the battery is less than a preset threshold.

If the temperature of the battery is less than the preset threshold, S903 may be performed; otherwise, S901 may be performed.

S903: Supply power to the heating element.

In a case that the temperature of the battery is less than the preset threshold, it is necessary to charge the battery and heat the battery simultaneously. Therefore, a relatively small second charging current may be used to charge the battery in this case, where the first charging current is greater than the second charging current.

S904: Determine whether the temperature of the battery is less than the preset threshold and whether the heating duration is less than the first preset duration.

If the temperature of the battery is less than the preset threshold, and the heating duration is less than the first preset duration, S903 may be performed; otherwise, S905 may be performed.

S905: Stop supplying power to the heating element.

S906: Determine whether a heating stop duration is equal to the second preset duration.

Timing may be started after supplying of power to the heating element is stopped, and whether the duration obtained through timing is equal to the second preset duration is determined.

If the duration is equal to the second preset duration, S901 may be performed; otherwise, S906 may continue to be performed.

The electronic device provided in the embodiments of this application includes a first circuit board, a heating element, and a charging interface module, where an input port of the charging interface module is configured to be pluggable connected to an external power supply, and an output port of the charging interface module is electrically connected to an input end of the first circuit board, an output end of the first circuit board is electrically connected to the battery, the first circuit board charges the battery, the output port of the charging interface module is electrically connected to the heating element, and the heating element heats the battery. In this way, the heating element is added to the electronic device, and in a case that the temperature of the battery is relatively low, the heating element may heat the battery to increase the temperature of the battery, so that the charging speed of the battery is not affected by the low temperature, thereby increasing the charging speed of the battery.

It should be noted that, the charging method provided in this embodiment of this application may be performed by a charging apparatus, or a charging interface module in the charging apparatus for performing and loading the charging method. In this embodiment of this application, the charging method provided in this embodiment of this application is described by using an example in which the charging apparatus performs and loads the charging method.

FIG. 10 is a schematic structural diagram of an electronic device according to an embodiment of this application. The electronic device includes: an acquisition module 101, a power supply module 102, a power supply stop module 103, where
the acquisition module 101 acquires a temperature of the battery in a case that the battery is charged through the first circuit board;
the power supply module 102 supplies power to the heating element in a case that the temperature is less than a preset threshold and a heating duration of the heating element is less than a first preset duration, where the heating element heats the battery; and
the power supply stop module 103 stops supplying power to the heating element in a case that the temperature is greater than the preset threshold or the heating duration of the heating element is greater than or equal to the first preset duration.

Optionally, the electronic device further includes a charging module 104, where
the battery is charged based on a first charging current in a case that the temperature is greater than or equal to the preset threshold, where the first charging current is greater than a second charging current, and the second charging current is a charging current of the battery in a case that the heating element heats the battery.

The charging apparatus in this embodiment of this application may be an apparatus, or may also be a component, an integrated circuit, or a chip in a terminal. The apparatus may be a mobile electronic device, or may also be a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, a personal digital assistant (personal digital assistant, PDA), or the like, and the non-mobile electronic device may be a server, a network attached storage (Network Attached Storage, NAS), a personal computer (personal computer, PC), a television (television, TV), a teller machine, an automated machine, or the like, which are not specifically limited in this embodiment of this application.

The charging apparatus in this embodiment of this application may be an apparatus with an operating system. The operating system may be an Android (Android) operating system, or may be an ios operating system, or may further be another possible operating system, which is not specifically limited in this embodiment of this application.

The charging apparatus provided in this embodiment of this application can implement the processes implemented by the charging apparatus in the method embodiments shown in FIG. 8 and FIG. 9. To avoid repetition, details are not described herein again.

The electronic device provided in the embodiments of this application includes a first circuit board, a heating element, and a charging interface module, where an input port of the charging interface module is configured to be pluggable connected to an external power supply, and an output port of the charging interface module is electrically connected to an input end of the first circuit board, an output end of the first circuit board is electrically connected to the battery, the first circuit board charges the battery, the output port of the charging interface module is electrically connected to the heating element, and the heating element heats the battery. In this way, the heating element is added to the electronic device, so that when the battery is charged, in a case that a temperature of the battery is relatively low, the charging interface module cannot only charge the battery, and but also supply power to the heating element, so as to rapidly heat the battery to increase the temperature of the battery, and make the charging speed of the battery not be affected by the low temperature, thereby increasing the charging speed of the battery.

Optionally, embodiments of this application further provide an electronic device, including a processor 1110, a memory 1109, and a program or instructions stored in the memory 1109 and runnable on the processor 1110, where the program or the instructions, when being executed by the processor 1110, implements the processes of the embodiments of the charging method, and can achieve the same technical effects. To avoid repetition, details are not described herein again.

It should be noted that, the electronic device in this embodiment of this application includes the foregoing mobile electronic device and non-mobile electronic device.

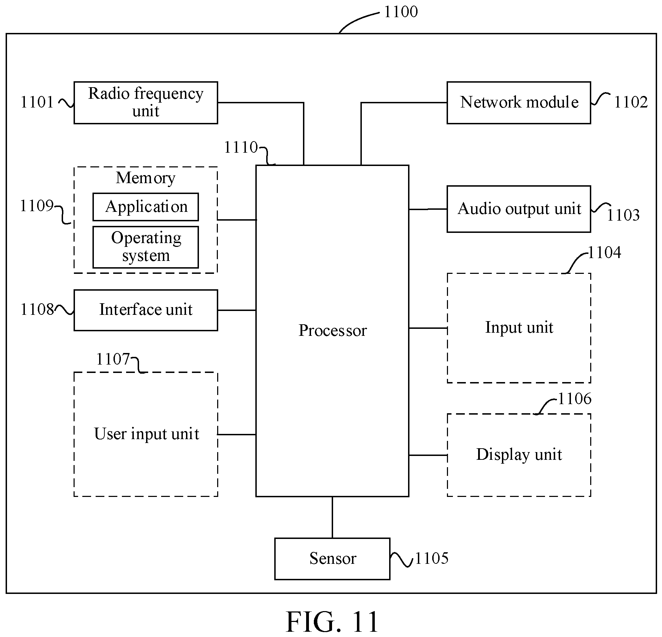

FIG. 11 is a schematic structural diagram of hardware of an electronic device for implementing the embodiments of this application.

The electronic device 1100 includes, but not limited to, components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that, the electronic device 1100 may further include a power supply (for example, a battery) for supplying power to the components. The power supply may be logically connected to the processor 1110 through a power supply management system, thereby implementing functions such as charging, discharging, and power consumption management, by using the power supply management system. The structure of the electronic device shown in FIG. 11 constitutes no limitation on the electronic device, and the electronic device may include more or fewer components than those shown in the figure, or some components may be combined, or a different component deployment may be used, which are not described herein again.

The processor 1110 is configured to acquire a temperature of the battery in a case that the battery is charged through the first circuit board; supply power to the heating element in a case that the temperature is less than a preset threshold and a heating duration of the heating element is less than a first preset duration, where the heating element heats the battery; and stop supplying power to the heating element in a case that the temperature is greater than the preset threshold, or the heating duration of the heating element is greater than or equal to the first preset duration.

In this way, the heating element is added to the electronic device, so that when the battery is charged, in a case that a temperature of the battery is relatively low, the charging interface module cannot only charge the battery, and but also supply power to the heating element, so as to rapidly heat the battery to increase the temperature of the battery, and make the charging speed of the battery not be affected by the low temperature, thereby increasing the charging speed of the battery.

Optionally, the processor 1110 is further configured to charge the battery based on the first charging current in a case that the temperature is greater than or equal to the preset threshold, where the first charging current is greater than the second charging current, and the second charging current is a charging current of the battery in a case that the heating element heats the battery.

The embodiments of this application further provide a readable storage medium, storing a program or instructions, where the program or the instructions, when being executed by a processor, implements the processes of the embodiments of the charging method, and can achieve the same technical effects. To avoid repetition, details are not described herein again.

The processor is the processor of the electronic device described in the foregoing embodiments. The readable storage medium includes a computer-readable storage medium, such as a read-only memory (Read-Only Memory, ROM), a random access memory (Random Access Memory, RAM), a magnetic disk, or an optical disc.

The embodiments of this application further provide a chip, including a processor and a communication interface, where the communication interface is coupled to the processor, and the processor is configured to run a program or instructions to implement the processes of the embodiments of the charging method, and can achieve the same technical effects. To avoid repetition, details are not described herein again.

It should be noted that, the chip mentioned in the embodiments of this application may also be referred as a system-level chip, a system chip, a chip system, a system on chip, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. Without more limitations, elements defined by the sentence "including one" does not exclude that there are still other same elements in the process, method, article, or apparatus. In addition, it should be noted that, the scope of the methods and apparatuses in the embodiments of this application is not limited to performing the functions in the order shown or discussed, but may also include performing the functions in a substantially simultaneous manner or in the reverse order depending on the functions involved. For example, the described methods may be performed in an order different from those described, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented by using software and a necessary general hardware platform, and certainly, may also be implemented by hardware, but in many cases, the former manner is a better implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make various variations without departing from the idea of this application and the scope of protection of the claims, and such variations shall all fall within the protection scope of this application.

## Claims

1. An electronic device, comprising a battery, a first circuit board, a heating element, and a charging interface module, wherein
an input port of the charging interface module is configured to be pluggable connected to an external power supply, an output port of the charging interface module is electrically connected to an input end of the first circuit board, an output end of the first circuit board is electrically connected to the battery, and the first circuit board charges the battery; and
the output port of the charging interface module is electrically connected to the heating element, and the heating element heats the battery.

2. The electronic device according to claim 1, further comprising:
an auxiliary board, wherein the output port of the charging interface module is connected to the heating element through the auxiliary board and the input end of the first circuit board.

3. The electronic device according to claim 1, further comprising:
a control module, wherein the control module is connected to the heating element, and is configured to control the heating element to heat the battery.

4. The electronic device according to claim 1, further comprising a battery compartment and a battery rear cover, wherein the battery compartment is configured to accommodate the battery; and
the heating element is located between the battery compartment and the battery, or located between the battery and the battery rear cover.

5. The electronic device according to claim 4, wherein
the first circuit board is located between the heating element and the battery compartment, or located between the heating element and the battery rear cover.

6. The electronic device according to claim 1, wherein
the heating element is at least partially in contact with the battery.

7. The electronic device according to claim 1, wherein
the heating element comprises a resistor and an insulation layer.

8. A charging method, applied to the electronic device according to any one of claims 1 to 7, and comprising:
acquiring a temperature of the battery in a case that the battery is charged through the first circuit board;
supplying power to the heating element in a case that the temperature is less than a preset threshold and a heating duration of the heating element is less than a first preset duration, wherein the heating element heats the battery; and
stopping supplying power to the heating element in a case that the temperature is greater than the preset threshold, or the heating duration of the heating element is greater than or equal to the first preset duration.

9. The method according to claim 8, further comprising:
charging the battery based on a first charging current in a case that the temperature is greater than or equal to the preset threshold, wherein the first charging current is greater than a second charging current, and the second charging current is a charging current of the battery in a case that the heating element heats the battery.

10. A charging apparatus, applied to the electronic device according to any one of claims 1 to 7, and comprising:
an acquisition module, configured to acquire a temperature of the battery, in a case of charging the battery through the first circuit board;
a power supply module, configured to supply power to the heating element in a case that the temperature is less than a preset threshold and a heating duration of the heating element is less than a first preset duration, wherein the heating element heats the battery; and
a power supply stop module, configured to stop supplying power to the heating element in a case that the temperature is greater than the preset threshold or the heating duration of the heating element is greater than or equal to the first preset duration.

11. An electronic device, comprising a processor, a memory, and a program or instructions stored in the memory and runnable on the processor, wherein the program or the instructions, when being executed by the processor, implements steps of the method according to claim 8 or 9.

12. A readable storage medium, storing a program or instructions, wherein the program or the instructions, when being executed by a processor, implements steps of the method according to claim 8 or 9.

13. A chip, comprising a processor and a communication interface, wherein the communication interface is coupled to the processor, and the processor is configured to run a program or instructions to implement the method according to claim 8 or 9.
